# EUROPEAN PATENT SPECIFICATION

(11) **EP 0 458 763 B1**
(45) Date of publication and mention of the grant of the patent: **12.01.1994**
(21) Application number: 91830203.5
(22) Date of filing: 14.05.1991
(51) Int. Cl.: B60J 7/12, B60J 1/04, B62D 33/06

(54) **A tractor, particularly a garden tractor, with a flexible hood which can be lowered**
Schlepper, insbesondere ein Gartenschlepper mit einem biegsamen niederholbaren Dach
Tracteur, en particulier un tracteur pour jardin, avec un toit flexible qui peut être baissé

(30) Priority: 22.05.1990 IT 5304790 U
(43) Date of publication of application: 27.11.1991
(73) Proprietor: SAME S.p.A., I-24047 Treviglio (Bergamo) (IT)
(72) Inventor: Vicentini, Vittorio, I-24047 Treviglio Bergamo (IT)
(74) Representative: Bosotti, Luciano

(56) References cited:
- CH-A- 112 135
- GB-A- 370 305
- GB-A- 741 644
- GB-A- 2 101 539
- US-A- 1 426 912
- US-A- 1 952 252

## Description

The present invention relates to tractors and more particularly to a garden tractor which has an open driving position, that is, one which is not enclosed by a cab.

A tractor according to the preamble of claim 1 is known, for example, from CH-A-112 135.

The object of the invention is to provide a tractor of this type with a cover which is simple, functional and of pleasing appearance, for affording overhead and rearward protection to the driving position against atmospheric agents.

According to the invention, this object is achieved by virtue of the fact that the tractor has a flexible hood which can be lowered and comprises a fabric cover forming a substantially vertical wall and a substantially horizontal wall defining the rear and the top of the driving position respectively, the vertical wall being anchored at its lower edge to the structure of the tractor, a rear arch which has toggles and can be folded between a lowered position and an erect position for supporting and tensioning the vertical wall of the fabric cover, a front anchoring arch for the attachment and tensioning of the horizontal wall of the fabric cover, and quick-release means for anchoring the fabric cover to the front arch.

By virtue of this structure, the hood can be erected and lowered manually (or possibly with the use of motor-driven servo-actuators) extremely conveniently and easily. In the erect condition, the cover effectively protects the driving position from rain and sun but leaves the driving position open at the sides of the tractor for convenient access and a better view for the driver. In the lowered condition, the flexible hood and the rear arch are gathered together in a compact, flattened condition behind the driving position.

The front anchoring arch also fulfils a useful protective function should the tractor turn over and is also preferably connected to the structure of the tractor so that it can be lowered, conveniently forwards.

In a preferred embodiment of the invention, the vertical and horizontal walls of the fabric cover form respective partial side walls for greater protection of the driving position.

The rear arch conveniently comprises an upper U-shaped element anchored permanently to the inner face of the fabric cover, a first pair of lower levers articulated at one end to opposite sides of the structure of the tractor and at the other end to the lower ends of the arms of the U-shaped element, a second pair of lower levers articulated to the structure of the tractor and to the arms of the U-shaped element respectively behind and above the corresponding articulations of the first levers and defining therewith an articulated quadrilateral structure, and a pair of quick-release engagement members for locking the articulations between the first levers and the arms of the U-shaped element when the rear arch is in the erect position.

The means for anchoring the fabric cover to the front arch conveniently comprise a plurality of pins which are carried by a rigid end part of the horizontal wall of the fabric cover and are engaged from above in corresponding recesses in the front arch, and a tie which is fixed permanently to the rigid end wall, passes beneath the front arch, and is fastened by a buckle carried by the back of the horizontal wall near the rear arch.

To advantage, the tie can also be used for restraining the hood when the rear arch is in its lowered position with the fabric cover gathered behind the driving position.

The invention will now be described in detail with reference to the appended drawings, provided purely by way of non-limiting example, in which:
Figure 1 is a schematic perspective view of a garden tractor with a flexible hood which can be lowered, according to the invention,
Figure 2 is a longitudinal section taken on the line II-II of Figure 1 on an enlarged scale,
Figure 3 is a view similar to Figure 2 showing the hood at an intermediate stage of its lowering,
Figure 4 is a view similar to Figures 2 and 3 with the hood in the lowered condition,
Figure 5 shows the detail indicated by the arrow V in Figure 2, on an enlarged scale,
Figure 6 is an exploded perspective view of a detail of the hood,
Figure 7 is a partially sectioned perspective view of the rear anchorage of the hood, and
Figure 8 is a cross-section taken on the line VIII-VIII of Figure 7 on an enlarged scale.

With reference to the drawings, a garden tractor according to the invention, indicated 1, has a driving position 2 which is normally open and, if desired,can be partially enclosed by a flexible hood, generally indicated 3, which can be lowered.

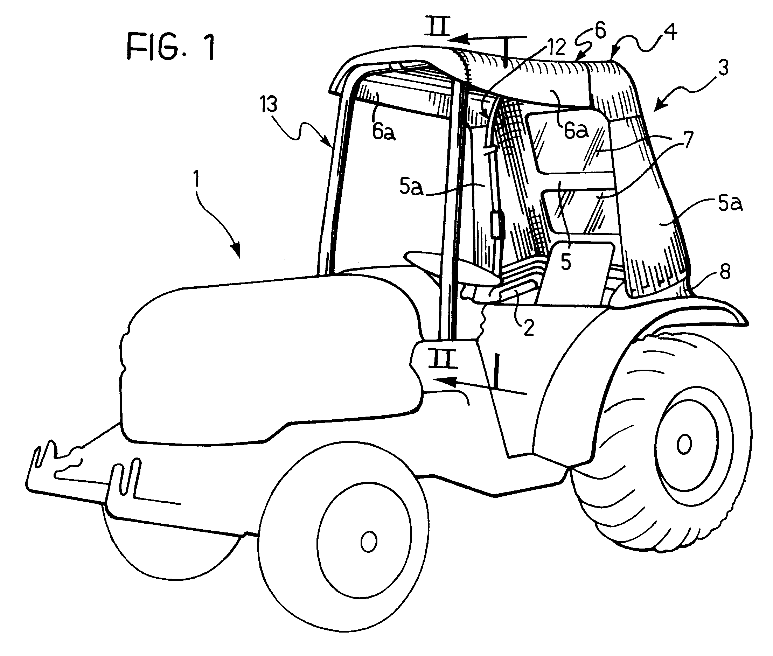

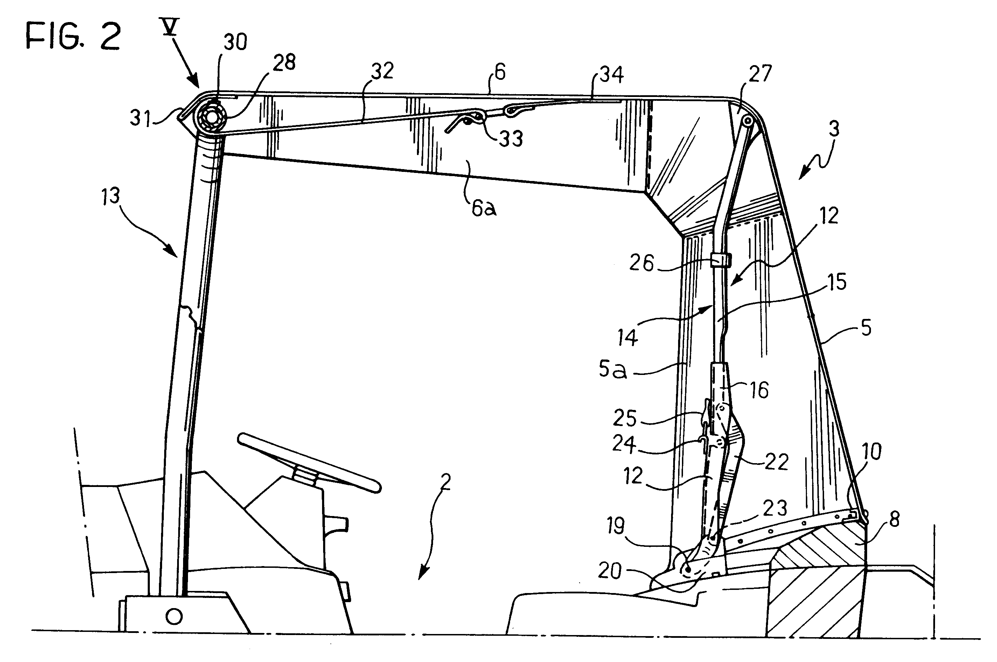

The hood 3 comprises essentially a cover 4 of waterproof fabric which, in its erect condition of use shown in Figures 1 and 2, defines a substantially vertical protective wall 5 situated behind the driving position 2 and a substantially horizontal upper wall 6 extending above the driving position 2 like a roof. The rear wall 5 has two transparent windows 7 to afford a view to the rear and both the walls 5 and 6 also have respective short extensions which are folded down to define respective partial side walls 5a, 6a.

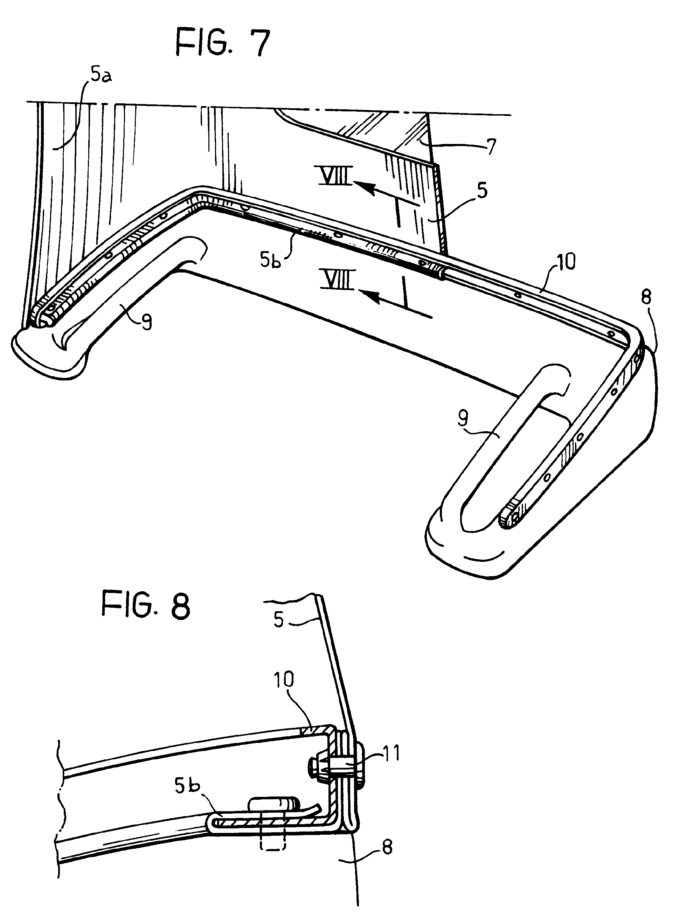

The base of the rear wall 5 is anchored permanently to the structure of the tractor 1 in the manner shown in greater detail in Figures 7 and 8. As can be seen in these drawings, the rear end of the driving position 2 is defined by a C-shaped element 8 fixed to the structure of the tractor 1 and forming two internal hand grips 9. The top of the element 8 carries a channel section 10 beneath which the lower edge 5a of the wall 5 is folded and is anchored against the rear of the element 10 by means of a plurality of rivets or similar retaining members 11.

The fabric cover 4 is supported in the erect position by a rear arch 12 with folding toggles and a front anchoring arch 13.

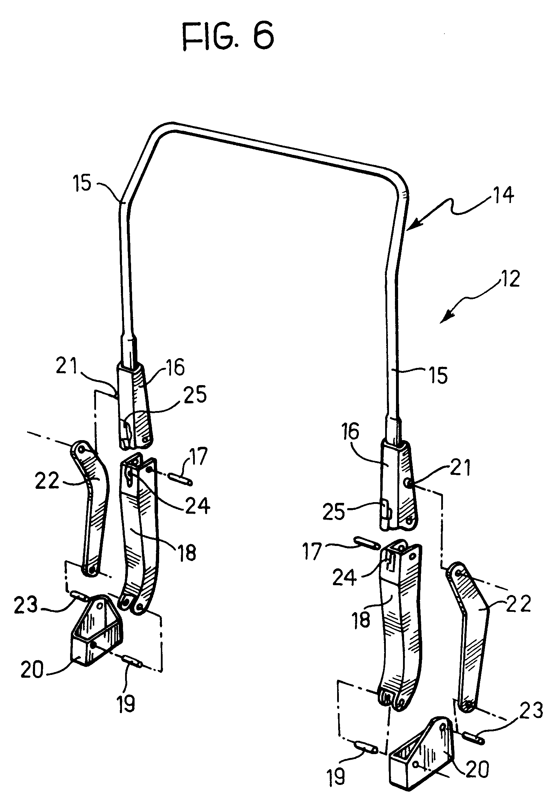

As shown in greater detail in Figure 6, the rear arch 12 comprises an upper U-shaped element 14 whose side arms 15 carry, at their lower ends, two connectors 16 each carrying a respective first transverse pin 17 for the articulation of an end of a first lever 18. The lower end of each lever 18 is articulated by a transverse pin 19 to a respective connector 20 fixed to a side of the structure of the tractor 1, beside the rear region of the driving position 2.

Above its pin 17, each connector 16 carries a further transverse pin 21 for the articulation of an end of a second lever 22 whose lower end is articulated to the respective support 20 by means of a further transverse pin 23 arranged behind and above the pin 19.

The two levers 22 are cranked slightly.

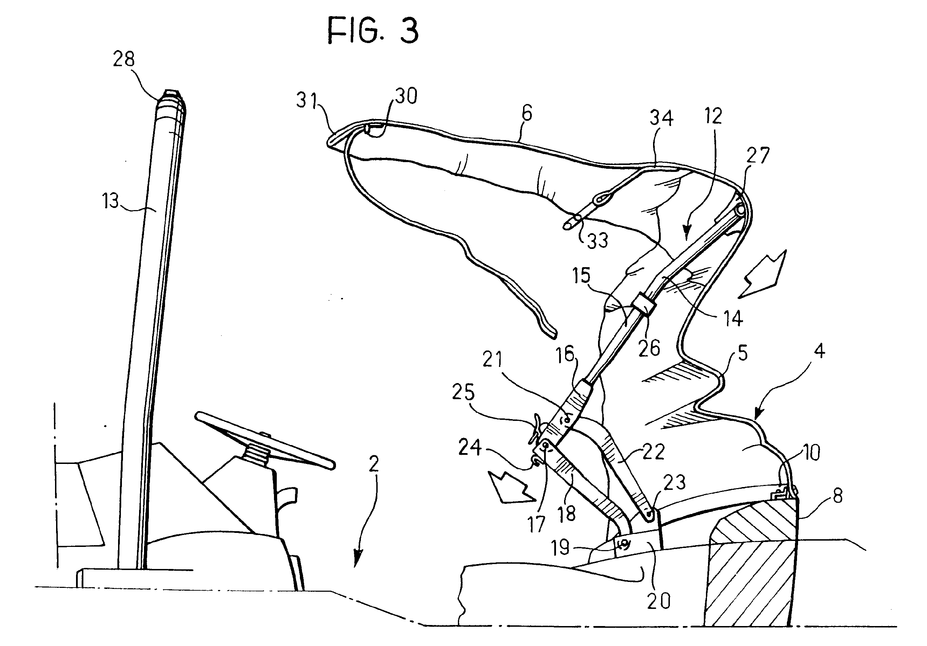

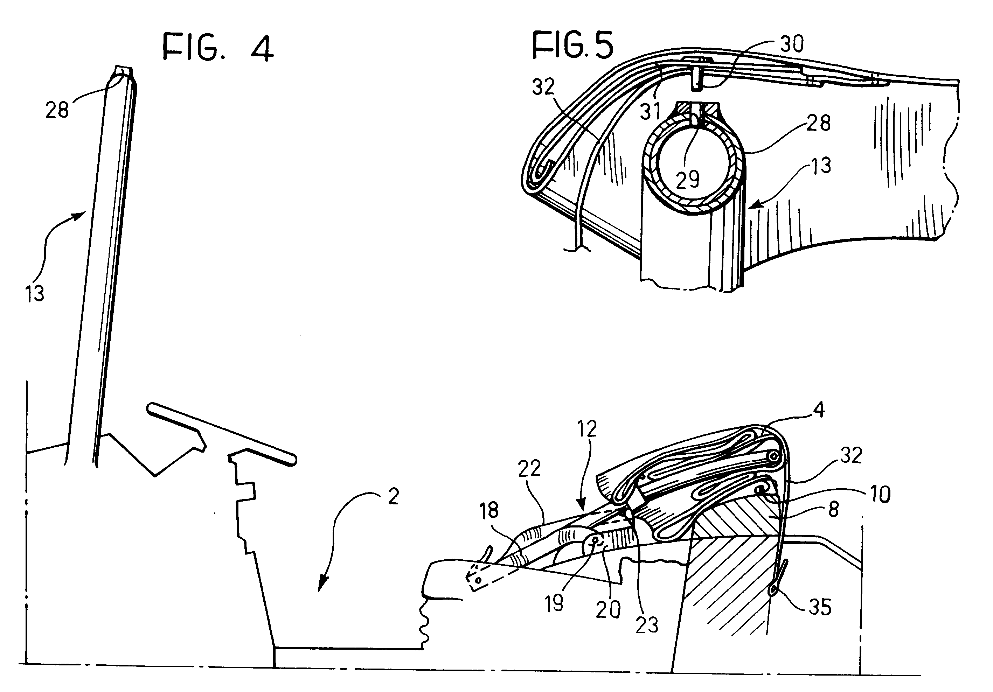

Each pair of levers 18, 22 defines, with the respective connector 16 and the respective support 20, an articulated quadrilateral toggle by means of which the rear arch 12 can be folded from the erect position of Figures 1 and 2 to the fully lowered position of Figure 4, passing through the intermediate configuration shown in Figure 3. The folding is achieved by the forward pivoting of the levers 18 and 22 and the corresponding rearward pivoting of the U-shaped element 14.

The rear arch 12 is locked in the erect position by a pair of hooks 24 carried by the tops of the levers 18 and a pair of pivoting levers 25 carried by the lower ends of the connectors 16 and adapted to engage the hooks 24.

The U-shaped element 14 of the rear arch 12 is anchored permanently to the fabric cover 4 in internal lateral and upper loops 26, 27 thereof. The arrangement is such that, when the rear arch 12 is in the erect position, the rear wall 5 of the fabric cover 4 is kept under tension and supported in the region of its connection with the upper wall 6.

The front arch 13 is also generally U-shaped and is connected to the sides of the structure of the tractor in front of the driving position 2. As well as acting as an anchoring element for the upper wall 6 of the fabric cover 4 in the manner described below, it also acts as a member for protecting the driver in the event of accidental overturning. It may have a rigid connection to the structure of the tractor 1 or an articulated one so that it can be lowered towards the front end of the tractor 1 when the fabric cover 4 is lowered.

With reference in greater detail to Figure 5, the yoke 28 of the front arch 13 is formed with a plurality of apertures 29 with vertical axes in its top and these serve for the engagement of corresponding pins 30 carried by a rigid end portion 31 fitted to the front end of the wall 6 of the fabric cover 4. This rigid portion 31 is shaped so as to be partially wrapped around the yoke 28 and also acts as a permanent engagement element for a tie 32 which is adapted to cooperate, in the manner shown in Figure 2, with a buckle 33 fixed to the back face of the wall 6 at 34, near the junction between the wall 6 and the rear wall 5.

When the hood 3 is in the erect position which corresponds, as stated, to the raised configuration of the rear arch 12, the pins 30 are engaged in the recesses 29 in the front arch 13 and the tie 32 passes under the yoke 28 and is fastened under tension by the buckle 33.

In order to lower the hood 3 from this position, it is necessary to release the tie 32 from the buckle 33 and raise the front edge of the vertical wall 6 so as to release the pins 30 from the recesses 29.

At this point, the wall 6 is folded or rolled up as far as its junction with the rear wall 5. If the levers 25 are released from the hooks 24, the rear arch 12 can then be folded in the manner explained above (Figure 3) until it is arranged in the fully lowered condition of Figure 4. During the lowering of the rear arch 12, the rear wall 5 of the fabric cover 4 is folded like a bellows between the U-shaped element 14 of the rear arch 12 and the element 8. As shown in Figure 4, in this position, the bundle formed by the folded fabric cover 4 and the lowered rear arch 12 is fixed firmly to the structure of the tractor 1 by means of the same tie 32 which is fastened by a retaining member 35 fitted, for example, to the rear face of the element 8.

Naturally, in order to return the hood 4 to its raised position of use, the steps described above should be carried out in reverse.

Although, in the embodiment illustrated, the steps for erecting and lowering the hood 3 are intended to be carried out manually, motor-driven servo-actuators may be provided, for example, for lowering and raising the rear arch 12 and perhaps for rolling up and unrolling the fabric cover 4. For this purpose, suitable motor-driven caliper structures, not illustrated, could be provided and arranged also to engage the front end of the wall 6 with the front arch 13 automatically.

## Claims

1. A tractor, particularly a garden tractor, with an open driving compartment and, a flexible hood (3) which can be lowered and comprises a fabric cover (4) characterised in that the hood forms a substantially vertical wall (5) and a substantially horizontal wall (6) defining the rear and the top of the driving compartment (2) respectively, the vertical wall (5) being anchored at its lower edge to the structure (8, 10) of the tractor (1), a rear arch (12) which has toggle joints and can be folded between a lowered position and an erect position for supporting and tensioning the vertical wall (5) of the fabric cover (4), a front anchoring arch (13) for the attachment and tensioning of the horizontal wall (6) of the fabric cover (4), and quick-release means (29, 30, 32) for anchoring the fabric cover (4) to the front arch (13).

2. A tractor according to Claim 1, characterised in that the said front arch (13) is tiltable between a raised and a forwardly-lowered position.

3. A tractor according to Claim 1, characterised in that the vertical wall (5) and the horizontal wall (6) of the fabric cover form respective partial side walls (5a, 6a).

4. A tractor according to Claim 1, characterised in that the rear arch (12) comprises an upper U-shaped element (14) anchored to the inner face of the fabric cover (4), a first pair of lower levers (18) articulated at one end to opposite sides (20) of the structure of the tractor (1) and at the other end to the lower ends (16) of the arms (15) of the U-shaped element (14), a second pair of lower levers (22) articulated to the structure (20) of the tractor (1) and to the lower ends (16) of the arms (15) of the U-shaped element (14) respectively behind and above the corresponding articulations of the first levers (18) and defining therewith two articulated quadrilateral structures, and a pair of quick-release engagement members (24, 25) for locking the articulations between the first levers (18) and the arms (15) of the U-shaped element (14) when the rear arch is in the erect position.

5. A tractor according to Claim 1, characterised in that the means for anchoring the fabric cover(4) to the front arch (13) comprise a plurality of pins (30) which are carried by a rigid end part (31) of the horizontal wall (6) of the fabric cover (4) and are engaged from above in corresponding recesses (29) in the yoke (28) of the front arch (13), and a tie (32) which is fixed permanently to the rigid end part (31), passes beneath the yoke (28) of the front arch (13), and is fastened by a buckle (33) carried by the back of the horizontal wall (6) near the rear arch (12).

6. A tractor according to Claim 5, characterised in that the tie (32) can be used for restraining the hood (3) when the rear arch (12) is in the lowered position with the fabric cover (4) gathered behind the driving compartment (2).

## Patentansprüche

1. Traktor, besonders ein Gartentraktor, mit einem offenen Fahrerabteil sowie einem flexiblen Verdeck (3), das abgesenkt werden kann und eine Stoffbespannung (4) besitzt, dadurch gekennzeichnet, daß das Verdeck eine im wesentlichen senkrechte Wand (5) sowie eine im wesentliche horizontale Wand (6), die die Rückseite bzw. die Oberseite des Fahrerabteils (2) bilden, wobei die vertikale Wand (5) an ihrem unteren Rand am Aufbau (8, 10) des Traktors (1) verankert ist, einen hinteren Bogen (12), der Gelenke besitzt und zwischen einer abgesenkten Stellung und einer aufrechten Stellung gefaltet werden kann, um die vertikale Wand (5) der Stoffbespannung (4) zu halten und zu spannen, einen vorderen Verankerungsbogen (13) für die Befestigung und Spannung der horizontalen Wand (6) der Stoffbespannung (4) sowie eine Schnellfreigabeeinrichtung (29, 30, 32) besitzt, um die Stoffbespannung (4) am vorderen Bogen (13) zu verankern.

2. Traktor gemäß Anspruch 1, dadurch gekennzeichnet, daß der vordere Bogen (13) zwischen einer angehobenen und einer vorne abgesenkten Stellung gekippt werden kann.

3. Traktor gemäß Anspruch 1, dadurch gekennzeichnet, daß die vertikale Wand (5) und die horizontale Wand (6) der Stoffbespannung entsprechende Teilseitenwände (5a, 6a) bilden.

4. Traktor gemäß Anspruch 1, dadurch gekennzeichnet, daß der hintere Bogen (12) ein oberes U-förmiges Element (14), das an der Innenfläche der Stoffbespannung (4) verankert ist, ein erstes Paar von unteren Hebeln (18), die an einem Ende mit den gegenüberliegenden Seiten (20) des Aufbaus des Traktors (1) und am anderen Ende mit den unteren Enden (16) der Arme (15) des U-förmigen Elements (14) gelenkig verbunden sind, ein zweites Paar von unteren Hebeln (22), die mit dem Aufbau (20) des Traktors (1) bzw. den unteren Enden (16) der Arme (15) des U-förmigen Elements (14) hinter und über den entsprechenden Gelenken der ersten Hebel (18) gelenkig verbunden sind und damit zwei vierseitige Gelenksaufbauten bilden, sowie ein Paar von Schnellfreigabe-Eingreifgliedern (24, 25) besitzt, um die Gelenke zwischen den ersten Hebeln (18) und den Armen (15) des U-förmigen Elements (14) zu verriegeln, wenn sich der hintere Bogen in der aufrechten Stellung befindet.

5. Traktor gemäß Anspruch 1, dadurch gekennzeichnet, daß die Einrichtung, um die Stoffbespannung (4) mit dem vorderen Bogen (13) zu verankern, eine Vielzahl von Zapfen (30), die von einem steifen Endteil (31) der horizontalen Wand (6) der Stoffbespannung (4) getragen werden und von oben in entsprechende Ausnehmungen (29) im Joch (28) des vorderen Bogens (13) eingreifen, sowie ein Zugband (32) besitzt, das dauernd am steifen Endteil (31) befestigt ist, unterhalb des Jochs (28) des vorderen Bogens (13) verläuft und mit einer Schnalle (33) befestigt ist, die von der Rückseite der horizontalen Wand (6) in der Nähe des hinteren Bogens (12) getragen wird.

6. Traktor gemäß Anspruch 5, dadurch gekennzeichnet, daß das Zugband (32) dazu verwendet werden kann, um das Verdeck (3) zurückzuhalten, wenn sich der hintere Bogen (12) in der abgesenkten Stellung befindet, wobei die Stoffbespannung (4) hinter das Fahrerabteil (2) gefaltet ist.

## Revendications

1. Tracteur, notamment de jardin, ayant un compartiment libre de conduite et une capote souple (3) qui peut être baissée et qui comporte une bâche (4), caractérisé en ce que la capote forme une paroi sensiblement verticale (5) et une paroi sensiblement horizontale (6) délimitant l'arrière et la partie supérieure du compartiment de conduite (2) respectivement, la paroi verticale (5) étant fixée, à son bord inférieur, à la structure (8, 10) du tracteur (1), un arceau arrière (12) qui a des articulations à genouillère et qui peut être plié entre une position baissée et une position dressée pour le support et la mise sous tension de la paroi verticale (5) de la bâche (4), un arceau avant (13) d'ancrage destiné à fixer et tendre la paroi horizontale (6) de la bâche (4), et un dispositif de libération rapide (29, 30, 32) destiné à fixer la bâche (4) à l'arceau avant (13).

2. Tracteur selon la revendication 1, caractérisé en ce que l'arceau avant (13) peut pivoter entre une position levée et une position baissée vers l'avant.

3. Tracteur selon la revendication 1, caractérisé en ce que la paroi verticale (5) et la paroi horizontale (6) de la bâche forment des parois latérales partielles respectives (5a, 6a).

4. Tracteur selon la revendication 1, caractérisé en ce que l'arceau arrière (12) comporte un élément supérieur en U (14) fixé à la face interne de la bâche (4), une première paire de leviers inférieurs (18) articulés à une première extrémité sur les côtés opposés (20) de la structure du tracteur (1) et, à l'autre extrémité, aux extrémités inférieures (16) des bras (15) de l'élément en U (14), une seconde paire de leviers inférieurs (22) articulés sur la structure (20) du tracteur (1) et aux extrémités inférieures (16) des bras (15) de l'élément en U (14) respectivement derrière les articulations correspondantes des premiers leviers (18) et au-dessus de celles-ci, et délimitant avec elles deux structures articulées en forme de quadrilatère, et une paire d'organes (24, 25) de coopération à libération rapide destinés à bloquer les articulations entre les premiers leviers (18) et les bras (15) de l'élément en U (14) lorsque l'arceau arrière est en position dressée.

5. Tracteur selon la revendication 1, caractérisé en ce que le dispositif destiné à ancrer la bâche (4) sur l'arceau avant (13) comporte plusieurs broches (30) qui sont supportées par une partie rigide (31) d'extrémité de la paroi horizontale (6) de la bâche (4) et qui coopèrent par-dessus avec des cavités correspondantes (29) de l'étrier (28) de l'arceau avant (13), et un tirant (32) qui est fixé de manière permanente à la partie rigide d'extrémité (31), qui passe sous l'étrier (28) de l'arceau avant (13) et qui est fixé par une boucle (33) portée par l'arrière de la paroi horizontale (6) à proximité de l'arceau arrière (12).

6. Tracteur selon la revendication 5, caractérisé en ce que le tirant (32) peut être utilisé pour la retenue de la capote (3) lorsque l'arceau arrière (12) est en position baissée, la bâche (4) étant regroupée derrière le compartiment de conduite (2).
